(19) **Europäisches Patentamt**
**European Patent Office**
**Office européen des brevets**

(11) **EP 2 632 653 B1**

(12) **EUROPEAN PATENT SPECIFICATION**

(45) Date of publication and mention of the grant of the patent:
**11.06.2014 Bulletin 2014/24**

(51) Int Cl.:
**B25J 9/16** *(2006.01)* **G05B 19/4062** *(2006.01)*

(21) Application number: **10771131.9**

(22) Date of filing: **28.10.2010**

(86) International application number:
**PCT/EP2010/066389**

(87) International publication number:
**WO 2012/055440 (03.05.2012 Gazette 2012/18)**

(54) **METHOD AND APPARATUS FOR MONITORING AND LIMITING THE VELOCITY OF AN INDUSTRIAL ROBOT**

VERFAHREN UND VORRICHTUNG ZUR ÜBERWACHUNG UND BEGRENZUNG DER GESCHWINDIGKEIT EINES INDUSTRIEROBOTERS

PROCÉDÉ ET APPAREIL PERMETTANT DE SURVEILLER ET DE LIMITER LA VITESSE D'UN ROBOT INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2013 Bulletin 2013/36**

(73) Proprietor: **ABB Research Ltd.**
**8050 Zürich (CH)**

(72) Inventors:
• **ZELAYA DE LA PARA, Hector**
**S-722 46 Västerås (SE)**
• **MELLANDER, Roger**
**S-722 33 Västerås (SE)**

(74) Representative: **Savela, Reino Aleksi**
**ABB AB**
**Intellectual Property**
**Ingenjör Bååths Gata 11**
**721 83 Västerås (SE)**

(56) References cited:
**EP-A1- 0 927 612**     **EP-A2- 0 269 373**
**EP-A2- 0 596 241**     **EP-A2- 1 332 841**
**US-A1- 2010 145 519**

• **JANSEN P L ET AL: "Transducerless position and velocity estimation in induction and salient AC machines", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2 October 1994 (1994-10-02), pages 488-495, XP010124039, DOI: DOI:10.1109/IAS.1994.345440 ISBN: 978-0-7803-1993-6**

## Description

### FIELD OF THE INVENTION

The present invention relates to a method and an apparatus method for monitoring and limiting the velocity of an industrial robot having an arm including a plurality of arm parts and a robot hand, which are movable relative each other about a plurality of joints, and the movements of the joints are driven by a plurality of motors.

### PRIOR ART

An industrial robot includes a manipulator and a control system for automatically operating the manipulator. The manipulator includes at least one arm having a plurality of arm parts that are movable relative each other about a plurality of joints. The outer arm part supports a hand that is rotatable about one or more joints. The hand includes a tool attachment, also called a faceplate, adapted to be attached to an object hold by the robot, such as a tool or a work object. The movements of the joints are driven by motors mounted on or close to each joint. Each joint is driven by one motor. The speeds and accelerations of the joints are controlled by the control system of the robot that generates control signals to the motors. The control system comprises drive units that control the motors by converting DC current to a variable alternating current in dependence on the control signals. The motors are equipped with position detectors, such as encoders or resolvers, to provide position feedback signals to the control system. The position detectors measure the angular speed of the motors. For safety reasons, the velocity of an object hold by the robot hand has to be monitored, and if the velocity of the object exceeds a certain threshold value, an action to limit the velocity of the object is required. Since the size of the object differs between different applications and is unknown due to the fact that it is added by the customer, the velocity of the object can be difficult to supervise. Instead, it is more convenient to supervise the velocity of the faceplate of the robot hand.

US 2009/0088898 discloses a robot controller for controlling a robot equipped with a robot hand portion including velocity calculation means for calculating moving velocities of the robot hand portion on coordinate axes of a rectangular coordinate system set for the robot controller, comparator means for comparing the calculated moving velocities with thresholds values for the axes of the rectangular coordinate system, and halting means for halting the robot in case any of the moving velocities is higher than the corresponding threshold value. The velocity calculation means calculates the velocity of the robot hand based on position data from position sensors of the motors and a kinematic model of the robot. A disadvantage with this method is that it is not safe since it is too slow and depends entirely on software. It takes time to transfer the position data to the robot control system and it is time consuming to calculate the velocity of the robot hand. If the velocity of the robot hand becomes too high, it is important to immediately take actions to stop the robot or at least reduce the velocity. Further, there is risk for a failure due to software bugs that can jeopardize the behaviour when, for example, the manipulator is used in collaborative mode.

A solution to this problem is to use a sensor which measures the velocity of the robot arm, as shown in US 7,468,594. However, extra sensors add costs to the robot.

### OBJECTS AND SUMMARY OF THE INVENTION

The object of the present invention is to provide a solution to the above mentioned problems.

According to one aspect of the invention this object is achieve by a method as defined in claim 1.

The method comprises repeatably: determining a parameter related to the angular speed of the motor for each motor of a selected subgroup of motors of the robot, determining whether or not one or more predefined criteria for allowed robot arm velocity are fulfilled based on the determined motor related parameter, wherein said criteria are defined with respect to maximum allowed angular speed of the motors of said subgroup of motors, and reducing the speed of one or more of the motors of the subgroup in case any of the criteria is not fulfilled. The parameter is the angular speed of the motor or the frequency of the motor.

According to the invention, a parameter related to the angular speed for some of the motors of the robot are used to supervise the velocity of the robot arm. With a parameter related to the angular speed of the motor is meant the angular speed itself or a parameter that depends on the speed of the motor, such as the frequency of the motor, which is directly proportional to the angular speed of the motor. The velocity of the robot arm is supervised based on some predefined criteria, which have been defined with respect to maximum allowed angular speed of the motors and with regard to maximum allowed velocity of the robot arm. An action is taken to limit the speed of the motors if those criteria are not fulfilled. This omits the time consuming step of calculating the velocity of the robot arm using a kinematic model of the robot. Further, the invention makes it possible to implement both the monitoring and the limitation functionality in hardware close to the power electronics. Thus, the monitoring and limitation is made independent of the software used in the control loops. Thereby, safety is increased. This reduces the risk for failure due to software bugs. Further, the monitoring and velocity limitation becomes fast. Another advantage is that no extra sensor is needed for monitoring the velocity of the robot arm.

The criteria for allowed robot arm velocity have been set up beforehand based on predetermined maximum values of the arm velocity. For example, the criteria have been set up based on a predetermined maximum allowed velocity of the faceplate, and/or a maximum allowed velocity of an elbow of the robot. The criteria include at least one predefined threshold value for the parameter for each motor of the subgroup. For example, the threshold values are predetermined based on off-line calculations of worse case velocities for the robot arm, for example, for robot hand and/or the TCP of the robot. If any of the criteria is not fulfilled, the speed of one or more of the motors is limited. Preferably, the speed of the motor is reduced to zero.

Limiting the arm velocity can be made in different ways, for example, the speed of one or more of the selected motors is limited, or the power supply to all of the motors of the robot is interrupted and the robot is stopped. For example, the power supply to all joints are interrupted by means of deactivating the power electronics

If all motors driving the joints of the robot are included in the subgroup, the performance of the robot will be significantly reduced. In order to achieve an acceptable performance of the robot, the number of motors in the subgroup should be less than the total number of joints of the robot. Preferably, the subgroup includes at least two motors less than the total number of motors driving the joints of the robot, to increase the performance of the robot. For at least some robot types, the influence on the velocity of the robot arm, such as the velocity of the face plate, differs between the joints of the robot. Preferably, the joints to be monitored, and accordingly the motors of the subgroup, are selected due to their dominating influence on the velocity of the faceplate, and accordingly on the velocity of the object hold by the robot. The joints which contribute most to the velocity of the robot faceplate are selected, and the motors driving those joints are selected to be supervised.

According to an embodiment of the invention, each of said motors is supplied with a variable alternating power, and the method comprises measuring a variable of the variable alternating power supplied to the motor for each motor of said selected subgroup of motors, and determining said motor related parameter based on the measured variable. The variable is the voltage or the current of the supplied power. An advantage with determining the parameter based on a measured variable of the power supplied to the motors is that it makes the measuring independent of the position detectors that provide position feedback signals to the control system. This solution is cheap, since already existing measuring units can be used for measuring the current or voltage of the supplied power.

According to an embodiment of the invention, the method comprises measuring a variable of the variable power supplied to each of the motors of the subgroup, determining the frequencies of the power supplied to the motors based on the measured variable, calculating the angular speeds of the motors based on the determined frequencies, and determining whether said predefined criteria are fulfilled or not based on the determined angular speeds and predefined threshold values for the angular speeds of the motors. The frequency of the power supplied to the motors can easily be determined by hardware, for example, using zero cross detector or a Phase lock Loop (PLL). Thus, this embodiment of the invention can easily be implemented using standard hardware and already existing measuring units.

According to another aspect of the invention this object is achieved by an apparatus as defined in claim 8.

The apparatus is adapted to repeatably determining a parameter related to the angular speed of the motor for each motor of a selected subgroup of motors of the robot, to determine whether or not one or more predefined criteria for allowed arm velocity are fulfilled based on the determined motor related parameters, wherein said criteria are defined with respect to maximum allowed angular speed of the motors of said subgroup of motors, and to limit the speed of one or more of the motors of the subgroup in case any of the criteria is not fulfilled.

According to an embodiment of the invention, the apparatus comprises a measuring system configured to measure a variable of the power supply to the motors of said selected subgroup of motors, and the apparatus is adapted to determine said motor related parameter based on the measured variable. The power to the motors is commonly supplied through three phases. To obtain redundancy, the measuring system is configured to measure the variable of at least two phases of the supplied power.

According to an embodiment of the invention, the safety unit comprises a plurality of hardware devices, such as a Phase Locked Loop (PLL) or a Zero Cross Detector, adapted to receive measurements of a variable of the variable power supplied to each of the motors of the subgroup, to determine the frequencies of the power supplied to the motors based on the measured variable, to calculate the angular speeds of the motors based on the determined frequencies, and to determine whether said predefined criteria are fulfilled or not based on the determined angular speeds and predefined threshold values for the angular speeds of the motors. This embodiment of the invention is implemented in hardware and does not contain any software.

Further developments of the apparatus are characterized by the features of the additional claims.

BRIEF DESCRIPTION OF THE DRAWINGS

The invention will now be explained more closely by the description of different embodiments of the invention and with reference to the appended figures.

Fig. 1    shows an apparatus for monitoring and limiting the velocity of an industrial robot according to a first embodiment of the invention.

Fig. 2    shows a part of an apparatus for monitoring and limiting the velocity of an industrial robot according to a second embodiment of the invention.

Fig. 3     shows an apparatus for monitoring and limiting the velocity of an industrial robot according to a third embodiment of the invention.

## DETAILED DESCRIPTION OF PREFERRED EMBODIMENTS OF THE INVENTION

An industrial robot includes a manipulator and a control system for automatically operating the manipulator. The manipulator includes one or more arms. Each arm includes a plurality of arm parts and a hand that are movable relative each other about a plurality of joints. One common type of industrial robot includes one arm having six joints. In this example, the manipulator includes a stationary foot, usually referred to as the base of the robot, which supports a first arm part, which is rotatable about a first joint. The first arm part supports a second arm part, which is rotatable about a second joint. The second arm part supports a third arm part which is rotatable about a third joint. The third arm supports a hand which is rotatable about a fourth, a fifth and a sixth joints. The robot hand comprises a tool attachment named a faceplate, which is adapted to hold a tool or a work object, in which an operating point, called TCP (Tool Centre Point), is defined. The movements of the joints are driven by motors mounted close to the joints. For safety reasons, the velocity of the tool centre point or the faceplate of the robot hand has to be monitored, and if the velocity exceeds a certain threshold value an action to limit the velocity of the robot is executed. According to the invention, instead of monitoring the actual velocity of the robot arm, such as the velocity of the TCP or the faceplate, the angular speed of some of the motors of the robot are supervised. Commonly, the angular speed of a motor is measured as RPM (revolutions per minute). The velocity of the robot arm is commonly measured in m/s.

Since supervising all of the motors significantly limits the performance of the robot, only some of the motors are supervised. For a robot having six or more joints, a satisfactory result is achieved by supervising only three or four of the motors driving the joints depending on the length of the arm parts. Thus, in a first step, it has to be determined which of the motors to be supervised. This is done by determining the influence of each motor on the arm velocity, and selecting the motors which have the most dominating influence on the velocity of the robot arm. This is, for example, done by off-line simulations of the robot. For example, for a conventional robot having six joints, the motors of joints, 1,2,3 and possibly the motor of joint 4 are selected to be supervised. Joints 5 and 6 have little influence on the velocity of the robot arm and accordingly the motors driving those joints are not selected.

In a second step, threshold values for a parameter to be supervised have to be determined. The parameter must be related to the angular speed of the motors and the threshold values for the parameter are determined based on maximum allowed angular speed for the selected motors. Thus, maximum allowed angular speed for the selected motors have to be determined. This is, for example, done by off-line calculations and simulations of worse case robot velocities.

In a third step, one or more predefined criteria for allowed robot arm velocity are set up. The criteria are defined with respect to maximum allowed angular speed of the motors of said subgroup of motors. The criteria include the predefined threshold values for the parameter for the motors of the subgroup. The criteria may include threshold values for individual motors as well as for combinations of motors. In the following, a few examples of criteria for the robot mentioned above having six joints are listed:

A first example of criteria:

$$V1 < V_{T1} \text{ and } V2 < V_{T2} \text{ and } V3 < V_{T3} \text{ and } V4 < V_{T4}$$

A second example of a criterion:

$$V1 + V2 + V3 + V4 < V_T$$

A third example of criteria for the robot having six joints:

$$V1 < V_{T1} \text{ and } V2 < V_{T2} \text{ and } V3 + V4 < V_T$$

where $V_i$ is the angular speed of the motor i
$V_{Ti}$ is the threshold value for the angular speed of the motor i,
$V_{Tij}$ is a threshold value for the angular speed of a combination of motors.

If the parameter is the motor frequency the criteria includes threshold values for the angular frequency of the selected motors.

A fourth example of criteria:

$$f1 < f_{T1} \text{ and } f2 < f_{T2} \text{ and } f1 + f2 + f3 + f4 < f_T$$

where $f_i$ is the frequency of the motor i
$f_{Ti}$ is a threshold value for the frequency of the motor i,
$f_T$ is a threshold value for the frequency of a combination of motors.

All criteria must be fulfilled to allow the robot to continue with the present arm velocity. In case any of the criteria is not fulfilled the arm velocity must be limited by reducing the speed of one or more of the motors of the robot.

The speed of the tool center point, TCP, can for example be calculated with help of Denavit-Hartenberg, D-H, transformation.
The D-H transformation for a link i is

$A_i = Rot_{z,i} Trans_{z,di} TranS_{x,ai} Rot_{x,ái}$

The four quantities $a_i$, $á_i$, $d_i$ and $_i$ are link length, link twist, link offset and joint angle and are parameters describing link i and joint i. The transformation from joint i to j is then

$T_i^j = A_i * A_j$

By calculating max TCP velocity and analyzing which joints need to be restricted to ensure a TCP lower than the requested limit, a maximum allowed mechanical angular speed will be known for each joint. The mechanical angular speed is then re-calculated to the motors electrical angular speed. The relationship between the motors mechanical and electrical RPM depends on the number of pole pairs, pp.

electrical RPM = mechanical RPM * pp

Then the motors maximum allowed RPM is known in advance and can be used as a threshold level. If needed it is possible to add margins to compensate for the measurement inaccuracy. Knowing the maximum electrical angular speed, the minimum allowed time between two zero crossings of the sine wave can be calculated. This is an example when zero crossing of the motor phases is used to monitor the motors angular speed.

If the frequency is known, the angular speed in RPM is calculated by: 120 * f / poles = rpm

where poles is the number of poles of the motor.

The frequency of the zero crossings for the sine wave is then proportional to the actual speed of the motor. The frequency to survey is calculated in advance i.e. offline and is used as threshold values to the hardware responsible for monitoring and limiting the speed. For example, by measuring the time between the zero crossing it is possible to detect if the motor runs faster than allowed and if such over speed is detected a speed limitations must be activated. This can, for example, be done with an ordinary frequency to voltage converter. It is even possible to add the individual voltages to have a more sophisticated surveillance with discrete analogue components. Another solution can be through programmable logic, or a combination thereof.

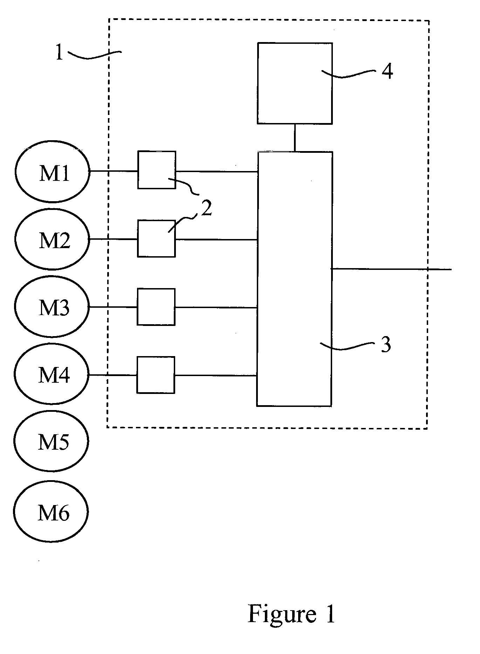

Figure 1 shows an apparatus 1 for monitoring and limiting the velocity of an industrial robot according to a first embodiment of the invention. In this example, the robot has six joints and includes six motors M1-M6 for driving the six joints. Four motors M1-M4 has been selected and those are included in the subgroup of motors to be monitored. The apparatus 1 includes a measuring system configured to measure a parameter related to the angular speed of the motor, such as the angular speed itself, or the frequency the motor. If the frequency is measured the RPM can be determined as rpm = 2 * f * 60 / poles. The measuring system includes one measuring unit 2 for each motor M1-M4, adapted to continuously measure the parameter of the motor. The measuring unit 2 can be any of a plurality of known types for measuring the motor frequency or speed, such as a camera, an accelerometer, a Hall component, an encoder, or a resolver. The motor frequency or motor speed can also be determined based on back EMF from a motor model, MRA ( Model Reference Adaptive), open loop models, observer models, exploited anisotropies, rotor slot harmonics, main inductance saturation, artificial saliency, or rotor slot leakage.

The apparatus further includes a logic unit 3, adapted to receive values of the measured parameter from the measuring units 2 and to determine whether or not one or more predefined criteria for allowed robot arm velocity are fulfilled based on the measured parameter. The logic unit 3 may include discrete analogue components, such as filters, amplifiers, comparators, programmable logic, as an FPGA, or a combination thereof. The apparatus also includes a data storage 4, such as a Flash memory, RAM, ROM, DRAM, EEPROM etc, or as an analogue level for storing or setting the threshold values for the parameter. The threshold values are, for example, stored in a look up table. Output from the logic unit 3 is one or more signals for limiting the velocity of the robot in case any of the criteria is not fulfilled. Thus, it is possible to detect if one or more of the motor run faster than allowed and to activate velocity reduction if such over speed is detected. The reduction of the velocity can be done by disable the gate drives, which is safe torque off, by turning off the power to the DC-bus, disconnect the motor, or engaging the brakes, add a PWM pattern to the gate drives to continue at maximum allowed speed or to smoothly stop the motor, etc. In all cases the motor speed will be limited before the motors contribution to the velocity of the object exceeds requested limit.

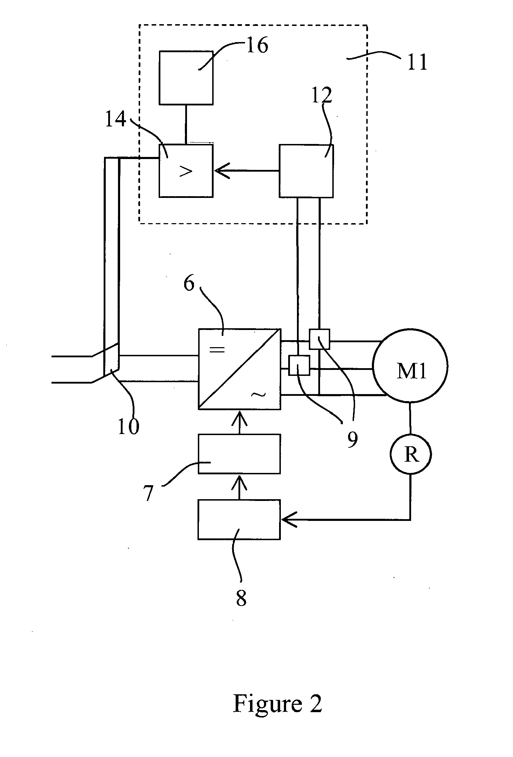

Figure 2 shows a three phase motor M1 driving one of the joints of the robot. A DC/AC converter 6 converts DC current to a variable alternating current in dependence on control signals from a control unit 7. The variable alternating current has three phases and is supplied to the motor M1. The speed of the motor depends on the frequency of the supplied alternating current. A measuring device, in this example a resolver R, measures the angular position of the motor. The measurements are transferred to a servo unit 8, which uses the measurements to control the speed of the motor. Transducers 9 are arranged to measure the variable alternating current supplied to the motor M1. At least two of the phases are provided with a transducer 9. The transducers 9 are used for supervising the current supplied to the motor M1. A breaker 10 is provided for breaking the DC current supplied to the DC/AC converter 6.

Further, figure 2 shows a part 11 of an apparatus for monitoring and limiting the velocity of a robot according to an embodiment of the invention. Each of the selected motors of the robot is provided with a similar part 11. The part 11 includes a determining unit 12 configured to receive current measurements from at least two of the transducers 9 and to determine a parameter, such as the angular speed or the frequency of the motor, to be used for supervising the motor. Current measurements from at least two of the phases are used to determine the parameter. This gives a redundancy and ensures that the surveillance and limitation will not fail if a single channel is lost. The determining unit 12 includes, for example, a PLL (Phase-Locked Loop) or a zero cross detector. For example, determining unit includes hardware for determining the frequency of the motor based on the measured current and hardware for converting the determined frequency to the angular speed of the motor, to be used for supervising the motor.

The part 11 includes a comparator 14 and a memory 16 for storing a threshold value for the parameter. In an analogue embodiment, the threshold values can be analogue voltage levels. In this example, the parameter is the angular speed in RPM of the motor and the criterion is that the measured speed of the motor V1 must be lower than a threshold value $V_{T1}$: $V1 < V_{T1}$ If this criterion is not fulfilled, the comparator generates a signal to the breaker 10, which interrupts the DC- power supply to the DC/AC converter 1.

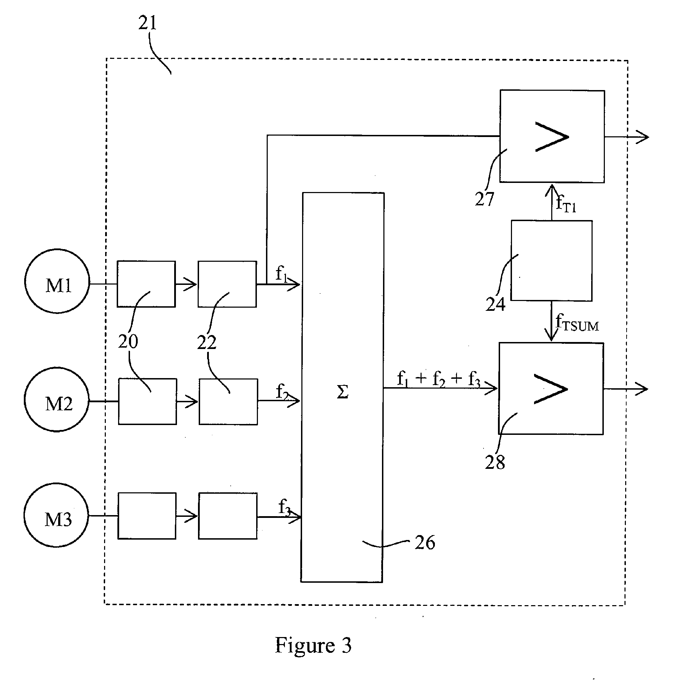

Figure 3 shows an apparatus for monitoring and limiting the velocity of an industrial robot including at least four joints, according to a third embodiment of the invention. The figure shows three motors M1-M3, which has been selected to be included in the subgroup of motors to be supervised. Maximum allowed angular speeds of the motors M1-M3 has been determined in advance, and is used as threshold values for the criteria. If needed it is possible to add margins to threshold values to compensate for the measurement inaccuracy. Knowing the maximum electrical angular speed, the time between two zero crossings of the sine wave of the variable power supply can be calculated:

$$120 * f / poles = rpm$$

The frequency of the zero crossings for the sine wave is then proportional to the actual speed of the motor. The frequency to survey is calculated in advance i.e. offline and is used as threshold values to the hardware responsible for monitoring and reducing the velocity. By measuring the time between the zero crossing, it is possible to detect if the motors runs faster than allowed and if such over speed is detected a speed reduction is activated.

The apparatus shown in figure 3 includes measuring units 20 configured to measure a variable, such as current or voltage of the variable alternating current supplied to the motors M1 - M3 and to provide an output which is proportional to the frequency of the motor. The measuring unit includes, for example, a PLL or a zero cross detector. A zero cross detector measures the variable alternating current supplied to the motor and detects the zero crossings of the current. The PLL measures the frequency of the current. The apparatus also includes components 22 adapted to convert the output from the measuring units to the motors mechanical frequency. The components 22 are, for example a counter or a timer. Alternatively, the components 22 can be adapted to convert the output from the measuring units to the motor speed. In that case, the threshold values are maximum allowed speeds for the motors.

In this example, the criteria are $f1 < f_{T1}$ and $f1 + f2 + f3 < f_{Tsum}$

The predetermined threshold values $f_{T1}$ and $f_{Tsum}$ for the frequencies are stored in data storage 24. The sum $f1 + f2 + f3$ of the frequencies is calculated in an itemizing totalizer 26. A first comparator 27 compares the measured frequency f1 with the threshold value $< f_{T1}$ from the data storage 24, and if the criterion $f1 < f_{T1}$ is not fulfilled, a signal is generated for limiting the velocity of the robot arm. A second comparator 28 compares the sum of the measured frequencies $f1 + f2 + f3$ with the threshold value $f_{Tsum}$ from the data storage 24, and if the criterion $f1 + f2 + f3 < f_{Tsum}$ is not fulfilled, a signal is generated for reducing the velocity of the robot arm.

The present invention is not limited to the embodiments disclosed but may be varied and modified within the scope of the following claims. For example, the number of joint of the robot may vary and the number of motors supervised.

## Claims

1. A method for monitoring and limiting the velocity of an industrial robot having an arm including a plurality of arm parts and a robot hand, which are movable relative each other about a plurality of joints, and the movements of the joints are driven by a plurality of motors, each motor being supplied with a variable alternating power, <u>**characterized in**</u> **that** the method comprises repeatably:

   - determining the frequency of the power supplied to each motor of a selected subgroup of motors of the robot,
   - determining whether or not one or more predefined criteria for allowed arm velocity are fulfilled based on the determined frequencies, wherein said criteria are defined with respect to maximum allowed angular speed of the motors of said subgroup of motors, and
   - reducing the speed of one or more of the motors of the subgroup in case any of the criteria is not fulfilled.

2. The method according to claim 1, wherein the method comprises measuring a variable of the variable alternating power supplied to the motor for each motor of said selected subgroup of motors, and determining the frequency based on the measured variable.

3. The method according to any of the previous claims, wherein said criteria include predefined threshold values for the frequencies and whether or not said criteria are fulfilled is determined based on the determined frequencies and the threshold values for the frequencies.

4. The method according to claim 3, wherein said threshold values are predetermined based on off-line calculations of predetermined maximum allowed velocities for the robot arm.

5. The method according to any of the previous claims, wherein said subgroup includes at least two motors less than the total number of motors of the robot and the motors are selected based on the influence on the velocity of the robot arm by the joints driven by the motors.

6. The method according to any of the previous claims, wherein the method comprises:

- measuring a variable of the variable power supplied to each of the motors of the subgroup,
- determining the frequencies of the power supplied to the motors based on the measured variable,
- calculating the angular speeds of the motors based on the determined frequencies, and
- determining whether said predefined criteria are fulfilled or not based on the determined angular speeds and predefined threshold values for the angular speeds of the motors.

7. An apparatus (1,11;21) for monitoring and limiting the velocity of an industrial robot having an arm including a plurality of arm parts and a robot hand, which are movable relative each other about a plurality of joints, and the movements of the joints are driven by a plurality of motors (M1-M6), each of motor being supplied with a variable alternating power, **characterized in** that the apparatus is adapted to repeatedly determining the frequency of the power supplied to each motor of a selected subgroup of motors of the robot, to determine whether or not one or more predefined criteria for allowed arm velocity are fulfilled based on the determined frequencies, wherein said criteria are defined with respect to maximum allowed angular speed of the motors of said subgroup of motors, and to limit the speed of one or more of the motors of the subgroup in case any of the criteria is not fulfilled.

8. The apparatus according to claim 7, wherein the apparatus comprises a measuring system (9) configured to measure a variable of the power supplied to the motors of said selected subgroup of motors, and the apparatus is adapted to determine the motor frequency based on the measured variable.

9. The apparatus according to claim 8, wherein the power to the motors is supplied through at least two phases, and said measuring system is configured to measure the voltage or current of said at least two phases.

10. The apparatus according to any of the claims 7 - 9, wherein it comprises a data storage (4;16;24) for storing threshold values for said frequencies, and the apparatus is adapted to determine whether or not said criteria are fulfilled based on the calculated frequencies and the stored threshold values for the frequencies.

11. The apparatus according to any of the claims 7 - 10, wherein said subgroup includes at least two motors less than the total number of motors of the robot.

12. The apparatus according to any of the claims 7 - 11, wherein the apparatus is adapted to generate a signal to interrupt the power supply to at least one of the motors of said subgroup of motors if any of the criteria is not fulfilled.

13. The apparatus according to any of the claims 7 - 12, wherein the apparatus comprises hardware devices (2,3; 12, 14;20,22,26,24,27,28) adapted to receive measurements of a variable of the variable power supplied to each of the motors of the subgroup, to determine the frequencies of the power supplied to the motors based on the measured variable, to calculate the angular speeds of the motors based on the determined frequencies, and to determine whether said predefined criteria are fulfilled or not based on the determined angular speeds and predefined threshold values for the angular speeds of the motors.

**Patentansprüche**

1. Verfahren zur Überwachung und Begrenzung der Geschwindigkeit eines Industrieroboters mit einem Arm mit mehreren Armteilen und einer Roboterhand, die in Bezug zueinander um mehrere Gelenke beweglich sind, und wobei die Bewegungen der Gelenke durch mehrere Motoren angetrieben sind, wobei jedem Motor eine variable Wechselleistung zugeführt wird, **dadurch gekennzeichnet, dass** das Verfahren wiederholbar Folgendes aufweist:

- Bestimmen der Frequenz der Leistung, die jedem Motor einer ausgewählten Untergruppe von Motoren des Roboters zugeführt wird,
- Bestimmen auf Grundlage der bestimmten Frequenzen, ob ein oder mehr vordefinierte Kriterien für zulässige Armgeschwindigkeit erfüllt sind oder nicht, wobei die Kriterien bezüglich maximal zulässiger Winkelgeschwindigkeit der Motoren der Untergruppe von Motoren definiert sind, und

- Verringern der Geschwindigkeit von einem oder mehr der Motoren der Untergruppe, falls eine beliebige der Kriterien nicht erfüllt ist.

2. Verfahren nach Anspruch 1, wobei das Verfahren das Messen einer Variablen der variablen Wechselleistung, die dem Motor zugeführt wird, für jeden Motor der ausgewählten Untergruppe von Motoren und das Bestimmen der Frequenz auf Grundlage der gemessenen Variablen aufweist.

3. Verfahren nach einem der vorhergehenden Ansprüche, wobei die Kriterien vordefinierte Schwellenwerte für die Frequenzen beinhalten, und auf Grundlage der bestimmten Frequenzen und der Schwellenwerte für die Frequenzen bestimmt wird, ob die Kriterien erfüllt sind oder nicht.

4. Verfahren nach Anspruch 3, wobei die Schwellenwerte auf Grundlage von Offline-Berechnungen von vorbestimmten, zulässigen Maximalgeschwindigkeiten für den Roboterarm vorbestimmt werden.

5. Verfahren nach einem der vorhergehenden Ansprüche, wobei die Untergruppe mindestens zwei Motoren weniger als die Gesamtanzahl von Motoren des Roboters enthält und die Motoren auf Grundlage des Einflusses auf den Roboterarm durch die Gelenke, die durch die Motoren angetrieben werden, ausgewählt werden.

6. Verfahren nach einem der vorhergehenden Ansprüche, wobei das Verfahren Folgendes aufweist:

   - Messen einer Variablen der variablen Leistung, die jedem der Motoren der Untergruppe zugeführt wird,
   - Bestimmen der Frequenzen der Leistung, die den Motoren zugeführt wird, auf Grundlage der gemessenen Variablen,
   - Berechnen der Winkelgeschwindigkeiten der Motoren auf Grundlage der bestimmten Frequenzen, und
   - Bestimmen, ob die vordefinierten Kriterien erfüllt sind oder nicht, auf Grundlage der bestimmten Winkelgeschwindigkeiten und vordefinierten Schwellenwerte für die Winkelgeschwindigkeiten der Motoren.

7. Vorrichtung (1; 11; 21) zur Überwachung und Begrenzung der Geschwindigkeit eines Industrieroboters mit einem Arm mit mehreren Armteilen und einer Roboterhand, die ihn Bezug zueinander um mehrere Gelenke beweglich sind, und wobei die Bewegungen der Gelenke durch mehrere Motoren (M1 bis M6) angetrieben sind, wobei jedem Motor eine variable Wechselleistung zugeführt ist, **dadurch ge-**

**kennzeichnet, dass** die Vorrichtung zum wiederholbaren Bestimmen der Frequenz der Leistung, die jedem Motor einer ausgewählten Untergruppe von Motoren des Roboters zugeführt ist, zum Bestimmen auf Grundlage der bestimmten Frequenzen, ob ein oder mehr vordefinierte Kriterien für zulässige Armgeschwindigkeit erfüllt sind oder nicht, wobei die Kriterien bezüglich maximal zulässiger Winkelgeschwindigkeit der Motoren der Untergruppe von Motoren definiert sind, und zum Verringern der Geschwindigkeit von einem oder mehr der Motoren der Untergruppe, falls eine beliebige der Kriterien nicht erfüllt ist, geeignet ist.

8. Vorrichtung nach Anspruch 7, wobei die Vorrichtung ein Messsystem (9) aufweist, das zum Messen einer Variablen der variablen Wechselleistung, die den Motoren der ausgewählten Untergruppe von Motoren zugeführt ist, konfiguriert ist, und wobei die Vorrichtung zum Bestimmen der Motorfrequenz auf Grundlage der gemessenen Variablen geeignet ist.

9. Vorrichtung nach Anspruch 8, wobei die Leistung den Motoren über mindestens zwei Phasen zugeführt ist und das Messsystem zum Messen der Spannung oder des Stroms der mindestens zwei Phasen konfiguriert ist.

10. Vorrichtung nach einem der Ansprüche 7 bis 9, wobei sie einen Datenspeicher (4; 16; 24) zum Speichern von Schwellenwerten für die Frequenzen aufweist und die Vorrichtung zum Bestimmen auf Grundlage der berechneten Frequenzen und der gespeicherten Schwellenwerte für die Frequenzen, ob die Kriterien erfüllt sind oder nicht, geeignet ist.

11. Vorrichtung nach einem der Ansprüche 7 bis 10, wobei die Untergruppe mindestens zwei Motoren weniger als die Gesamtanzahl von Motoren des Roboters enthält.

12. Vorrichtung nach einem der Ansprüche 7 bis 11, wobei die Vorrichtung dazu geeignet ist, ein Signal zum Unterbrechen der Leistungszufuhr zu mindestens einem der Motoren der Untergruppe von Motoren zu erzeugen, wenn ein beliebiges der Kriterien nicht erfüllt ist.

13. Vorrichtung nach einem der Ansprüche 7 bis 12, wobei die Vorrichtung Hardwaregeräte (2, 3; 12, 14; 20, 22, 26, 24, 27, 28) aufweist, die zum Empfangen von Messungen einer Variablen der variablen Leistung, die jedem der Motoren der Untergruppe zugeführt ist, zum Bestimmen der Frequenzen der Leistung, die den Motoren zugeführt ist, auf Grundlage der gemessenen Variablen, und zum Bestimmen auf Grundlage der bestimmten Winkelgeschwindigkeiten und vordefinierten Schwellenwerte für die Winkelgeschwindigkeiten der Motoren, ob die vordefinierten Kriterien erfüllt sind oder nicht, geeignet sind.

**Revendications**

1. Procédé de contrôle et de limitation de la vitesse d'un robot industriel comprenant un bras comportant plusieurs parties de bras et une main de robot, qui sont mobiles les unes par rapport aux autres autour de plusieurs jointures, les mouvements des jointures étant entraînés par plusieurs moteurs, chaque moteur étant alimenté par une électricité CA variable, **caractérisé en ce que** le procédé consiste à, de manière répétée :

    - déterminer la fréquence de l'électricité envoyée vers chaque moteur d'un sous-groupe choisi de moteurs du robot ;
    - déterminer si oui ou non un ou plusieurs critères prédéterminés pour une vitesse de bras permise sont remplis en fonction des fréquences déterminées, les critères étant définis par rapport à la vitesse angulaire permise maximale des moteurs dudit sous-groupe de moteurs ; et
    - réduire la vitesse d'un ou de plusieurs des moteurs du sous-groupe de moteurs dans le cas où l'un quelconque des critères n'est pas rempli.

2. Procédé selon la revendication 1, lequel consiste à mesurer une variable de l'électricité CA variable envoyée au moteur pour chaque moteur du sous-groupe choisis de moteurs, et à déterminer la fréquence en fonction de la variable mesurée.

3. Procédé selon l'une quelconque des revendications précédentes, dans lequel les critères comprennent des valeurs seuils prédéterminées pour les fréquences, et le fait que lesdits critères sont remplis ou non est déterminé en fonction des fréquences déterminées et des valeurs seuil pour les fréquences.

4. Procédé selon la revendication 3, dans lequel les valeurs seuils sont prédéterminées en fonction de calculs hors-ligne de vitesses permises maximales prédéterminées pour le bras de robot.

5. Procédé selon l'une quelconque des revendications précédentes, dans lequel ledit sous-groupe comprend au moins deux moteurs de moins que le nombre total de moteurs du robot, tandis que les moteurs sont choisis en fonction de l'influence exercée sur la vitesse du bras de robot par les jointures entraînées par les moteurs.

6. Procédé selon l'une quelconque des revendications précédentes, lequel consiste à :

    - mesurer une variable de l'électricité variable envoyée à chacun des moteurs du sous-groupe ;
    - déterminer les fréquences de l'électricité envoyée aux moteurs en fonction de la variable mesurée ;
    - calculer les vitesses angulaires des moteurs en fonction des fréquences déterminées ; et
    - déterminer si les critères déterminés sont remplis ou non en fonction des vitesses angulaires déterminées et des valeurs seuils prédéterminées pour les vitesses angulaires des moteurs.

7. Appareil (1 ; 11 ; 21) de contrôle et de limitation de la vitesse d'un robot industriel comprenant un bras comportant plusieurs parties de bras et une main de robot, qui sont mobiles les unes par rapport aux autres autour de plusieurs jointures, les mouvements des jointures étant entraînés par plusieurs moteurs (M1-M6), chaque moteur étant alimenté par une électricité CA variable, **caractérisé en ce que** l'appareil est conçu pour déterminer de manière répétée la fréquence de l'électricité envoyée vers chaque moteur d'un sous-groupe choisi de moteurs du robot, déterminer si oui ou non un ou plusieurs critères prédéterminés pour la vitesse de bras permise sont remplis en fonction des fréquences déterminées, lesquels critères sont définis par rapport à une vitesse angulaire permise maximale des moteurs du sous-groupe de moteurs, et limiter la vitesse d'un ou de plusieurs des moteurs du sous-groupe dans le cas où l'un quelconque des critères n'est pas rempli.

8. Appareil selon la revendication 7, lequel appareil comprend un système de mesure (9) conçu pour mesurer une variable de l'électricité envoyée aux moteurs du sous-groupe choisi de moteurs, et lequel appareil est conçu pour déterminer la fréquence du moteur en fonction de la variable mesurée.

9. Appareil selon la revendication 8, dans lequel l'électricité est envoyée vers les moteurs via au moins deux phases, et ledit système de mesure est conçu pour mesurer la tension ou le courant desdites au moins deux phases.

10. Appareil selon l'une quelconque des revendications 7 à 9, lequel comprend un stockage de données (4 ; 16 ; 24) afin de stocker des valeurs seuils pour lesdites fréquences, et lequel appareil est conçu pour déterminer si oui ou non les critères sont remplis en fonction des fréquences calculées et des valeurs seuils stockées pour les fréquences.

11. Appareil selon l'une quelconque des revendications 7 à 10, dans lequel le sous-groupe comprend au moins deux moteurs de moins que le nombre total de moteurs dans le robot.

**12.** Appareil selon l'une quelconque des revendications 7 à 11, lequel est conçu pour générer un signal afin d'interrompre l'alimentation électrique d'au moins un des moteurs du sous-groupe de moteurs si l'un quelconque des critères n'est pas rempli.

**13.** Appareil selon l'une quelconque des revendications 7 à 12, lequel appareil comprend des dispositifs matériels (2, 3 ; 12, 14 ; 20, 22, 26, 24, 27, 28) conçus pour recevoir les mesures d'une variable de l'électricité variable envoyée vers chacun des moteurs du sous-groupe, déterminer les fréquences de l'électricité envoyée vers les moteurs en fonction de la variable mesurée, calculer les vitesses angulaires des moteurs en fonction des fréquences déterminées, et déterminer si les critères prédéterminés sont remplis ou non en fonction des vitesses angulaires déterminées et des valeurs seuils prédéterminées pour les vitesses angulaires des moteurs.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090088898 A

- US 7468594 B